# EUROPÄISCHE PATENTSCHRIFT

(11) **EP 1 777 709 B1**
(45) Veröffentlichungstag und Bekanntmachung des Hinweises auf die Patenterteilung: **12.01.2011**
(21) Anmeldenummer: 06021783.3
(22) Anmeldetag: 18.10.2006
(51) Int. Cl.: G21C 1/09

(54) **Verfahren zur Drucksteuerung des Drucks eines Kühlmittels im Primärkreislauf einer Kernreaktoranlage sowie diesbezügliche Kernreaktoranlage**
Method for controlling the pressure of the coolant in the primary cooling system of a nuclear reactor plant and nuclear reactor plant for implementing the same
Procédé de réglage de la pression du fluide de refroidissement dans le circuit primaire d'une centrale nucléaire et centrale nucléaire équipée d'un dispositif apte à mettre en oeuvre ce procédé

(30) Priorität: 20.10.2005 DE 102005050646
(43) Veröffentlichungstag der Anmeldung: 25.04.2007
(73) Patentinhaber: AREVA NP GmbH, 91052 Erlangen (DE)
(72) Erfinder: Conrads, Hermann-Josef, 91074 Herzogenaurach (DE); Richter, Karl-Heinz, 21723 Hollern-Twielenfleth (DE)
(74) Vertreter: Tergau & Pohl Patentanwälte

(56) Entgegenhaltungen:
- EP-A1- 0 058 836
- WO-A-96/01476
- WO-A-99/40588
- DE-C1- 19 653 526
- DATABASE WPI Week 198834 Derwent Publications Ltd., London, GB; AN 1988-239627 XP002415251 & JP 63 173997 A (MITSUBISHI ATOMIC POWER IND) 18. Juli 1988 (1988-07-18)

## Beschreibung

Die Erfindung betrifft ein Verfahren zur Drucksteuerung des Drucks eines Kühlmittels im Primärkreislauf einer Kernreaktoranlage, insbesondere eines Druckwasserreaktors, sowie eine Kernreaktoranlage.

Bei einem Druckwasserreaktor, beispielsweise bei dem "European Pressurized Water Reactor" (EPR) wird in einem Reaktordruckbehälter Wasser als Kühlmittel erhitzt, in einen Primärkreislauf über einem Dampferzeuger und wieder zurück zum Reaktordruckbehälter geführt. Der Druck im Reaktordruckbehälter beträgt bei einem Druckwasserreaktor üblicherweise etwa 150 bar. Die Temperatur liegt im Normalbetrieb bei etwa 330°C.

Zur Aufrechterhaltung des Drucks im Primärkreislauf ist ein Druckhalter vorgesehen, welcher in Strömungsverbindung mit dem Primärkreislauf steht, und zwar ist der Druckhalter üblicherweise in den so genannten heißen Leitungspfad des Primärkreislaufes zwischen dem Reaktordruckbehälter und dem Dampferzeuger angeordnet. Der Druckhalter ist teilweise, üblicherweise bis zu etwa zwei Drittel, mit Wasser gefüllt. Der verbleibende Raum ist mit Dampf gefüllt. Über eine Beheizung und Verdampfung der Flüssigkeit im Druckhalter besteht die Möglichkeit, den Dampfdruck und damit den Druck im Primärkreislauf zu erhöhen. Zur Absenkung des Drucks ist üblicherweise eine Sprühvorrichtung im Druckhalter vorgesehen, über die kühleres Kühlmittel eingesprüht wird, so dass der Dampf im Dampfraum des Druckhalters kondensiert und der Dampfdruck vermindert wird. Das Kühlwasser für die Sprühvorrichtung wird aus dem so genannten kalten Leitungspfad des Primärkreislaufes zwischen Dampferzeuger und Reaktordruckbehälter und insbesondere strömungstechnisch nach einer Hauptkühlmittelpumpe aus dem Primärkreislauf entnommen.

Ein derartiger Druckhalter mit Sprühvorrichtung ist beispielsweise beschrieben in der DE 196 53 526 C1 oder auch in der DE 31 06 083 C2.

Beim Herabfahren der Kernreaktoranlage, beispielsweise im Zuge von routinemäßigen Revisionen oder einem routinemäßigen Brennelementewechsel, muss sowohl die Temperatur als auch der Druck im gesamten Primärkühlkreislauf heruntergefahren werden, bis das Kühlmittel im Primärkreislauf drucklos ist, also im Wesentlichen Umgebungsdruck aufweist. Umgekehrt muss beim Hochfahren der Anlage der Druck und die Temperatur auf die normalen Betriebsbedingungen angehoben werden, bevor die nukleare Energieerzeugung im Reaktordruckbehälter hochgefahren wird.

Da das Kühlmittel im Druckhalter zwar strömungstechnisch mit dem im Kreislauf geführten Kühlmittel des Primärkreislaufs in Verbindung steht, jedoch nicht wie dieses im Kreislauf geführt wird, führt dies beim Herunterfahren der Kemreaktoranlage dazu, dass die Temperaturdifferenz zwischen dem Kühlmittel im Primärkühlkreislauf und dem Kühlmittel im Druckhalter zunimmt. Die Temperaturdifferenz kann hierbei bis zu etwa 200°K betragen. Da der Druckhalter im Rahmen des Abfahrvorgangs über die strömungstechnische Verbindung zum Primärkreislauf entleert wird, besteht die Gefahr, dass die Bauteile im Bereich des strömungstechnischen Anschlusses des Druckhalters an den Primärkreislauf erheblich thermisch belastet werden und eventuell Schaden nehmen.

Beim Abfahrbetrieb wird mit Hilfe der Sprühvorrichtung des Druckhalters der Druck und die Temperatur abgesenkt. Parallel wird die im Kühlmittel des Primärkreislaufs gespeicherte Wärme zunächst über den Dampferzeuger und ab einem niedrigen Temperaturbereich zwischen 120°C bis etwa 80°C über ein zugeschaltetes Nachkühlsystem abgeführt. Die Druckreduzierung ist zunächst lediglich bis zu einem minimalen Betriebsdruck der Hauptkühlmittelpumpe möglich. Dieser liegt typischerweise im Bereich zwischen 20 und 30 bar, insbesondere bei etwa 25 bar. Durch die Wärmeabgabe über den Dampferzeuger und das Nachkühlsystem erreicht die Temperatur des Kühlmittels im Primärkreislauf nach und nach einen Wert von beispielsweise lediglich 50 bis 70°C. Umgekehrt hat sich die Temperatur im Druckhalter von ursprünglich etwa 330° lediglich auf etwa 230° reduziert, so dass hier noch eine Temperaturdifferenz von nahezu 200° besteht. Während der Wärmeabgabe über den Dampferzeuger und über das Nachkühlsystem ist eine Temperaturabsenkung des Kühlmittels im Druckhalter mittels der Sprühvorrichtung ohne ergänzende Maßnahmen nicht möglich, da ansonsten die Hauptkühlmittelpumpe nicht mehr betriebsfähig ist und ein weiteres Umwälzen des Kühlmittels zur Reduzierung der Wärme nicht mehr möglich ist.

Um den weiteren Betrieb der Hauptkühlmittelpumpe aufrecht zu erhalten, besteht die Möglichkeit, das im Druckhalter herrschende Dampfpolster durch ein Stickstoffpolster zu ersetzen und über dieses Stickstoffpolster den Druck im System auf mindestens beispielsweise 25 bar zu halten. Der Partialdruck des Dampfes und der Partialdruck des Stickstoffes müssen sich daher derart ergänzen, dass dieser Minimaldruck erreicht wird. Hierzu sind jedoch vergleichsweise große Mengen an Stickstoff sowie zusätzliche Stickstoff-Versorgungsleitungen und -armaturen erforderlich. Weiterhin wird durch eine derartige Maßnahme eine sehr große Menge an Stickstoff radioaktiv belastet und muss daher anschließend geeignet entsorgt werden. Wird der Druck über das Stickstoffpolster gehalten, so kann über die Sprühvorrichtung die Temperatur im Druckhalter immer weiter reduziert werden. Sobald das Kühlmittel im Primärkreislauf sowie im Druckhalter ausreichend abgekühlt ist und nur noch allenfalls eine geringe Temperaturdifferenz zwischen dem Kühlmittel im Druckhalter und dem im Primärkreislauf besteht, wird der Primärkreislauf drucklos gemacht und die Hauptkühlmittelpumpe abgeschaltet, indem das Kühlmittel aus dem Primärkreislauf abgelassen wird.

Der Erfindung liegt die Aufgabe zugrunde, eine betriebssichere und effiziente Drucksteuerung in einen Primärkreislauf im Rahmen eines solchen An- und Abfahrbetriebs zu ermöglichen.

Die Aufgabe wird erfindungsgemäß gelöst durch ein Verfahren zur Drucksteuerung mit den Merkmalen des Patentanspruchs 1. Unter Drucksteuerung wird sowohl das Erhöhen und ggf. Halten des Druckes bei einem An- oder Hochfahrbetrieb der Kernreaktoranlage als auch das Absinken und ggf. Halten des Druckes bei einem Abfahrbetrieb verstanden. Während des An- oder Abfahrbetriebs wird hierbei ein Druckspeicher dem Primärkreislauf zugeschaltet, um den Druck im Primärkreislauf zu steuern, insbesondere zu halten. Parallel hierzu wird die Temperatur des im Druckhalter befindlichen Kühlmittels verändert, nämlich abgesenkt im Falle des Abfahrens und angehoben im Falle des Hochfahrens. Anschließend wird der Druckspeicher wieder vom Primärkreislauf getrennt. Schließlich wird beim Abfahrbetrieb durch Entnahme von Kühlmittel der Druck reduziert, so dass der Primärkreislauf insbesondere vollständig drucklos wird. Beim Anfahrbetrieb wird der Druck weiter erhöht.

Der besondere Vorteil bei diesem Verfahren ist darin zu sehen, dass ein sowieso üblicherweise vorhandener Stickstoff-Druckspeicher herangezogen wird, um die Drucksteuerung des Kühlmitteldrucks im Primärkreislaufs zu übernehmen. Durch diese Maßnahme erfolgt über den Druckhalter keine weitere Drucksteuerung oder Druckregelung. Insbesondere ist nicht erforderlich, dass der Dampfdruck im Druckhalter oberhalb eines Minimaldrucks gehalten wird. Beim Abfahrbetrieb kann daher über die Sprühvorrichtung des Druckhalters die Temperatur im Druckhalter zügig reduziert werden, so dass beim späteren Ablassen des Kühlmittels aus dem Druckhalter keine Temperaturbelastung auftritt. Gleichzeitig sind durch die Verwendung des sowieso vorhandenen Stickstoff-Druckspeichers keine zusätzlichen Installationen und Maßnahmen erforderlich, um dieses sichere Herunterfahren zu gewährleisten. Weiterhin wird durch diese Maßnahme kein Stickstoff durch unmittelbaren Kontakt mit dem Kühlmittel des Primärkreislaufs radioaktiv belastet. Es ist daher auch kein belasteter Stickstoff zu entsorgen.

Die Verwendung des Druckspeichers zur Drucksteuerung auch beim Hochfahren hat den Vorteil, dass das Kühlmittel im Druckhalter schneller auf die erforderliche Betriebstemperatur gebracht werden kann, da der Druckhalter zunächst keine Drucksteuerfunktion übernehmen muss.

Um einen möglichst guten Wärmetauschprozess sowohl beim Anfahren als auch beim Abfahren und damit ein schnelles Abkühlen bzw. ein schnelles Erwärmen des Kühlmittels im Druckhalter zu ermöglichen, wird bevorzugt während der Drucksteuerung über den Druckspeicher das Kühlmittel des Druckhalters gemeinsam mit dem des Primärkreislaufs umgewälzt. Durch die Drucksteuerung über den Druckspeicher wird ein derartiger Umwälzbetrieb möglich, so dass das Kühlmittel im Druckspeicher und im Primärkreislauf zumindest annähernd die gleiche Temperatur aufweisen. Die Temperaturbelastung von Bauteilen aufgrund großer Temperaturdifferenzen ist daher vermieden.

Gemäß einer zweckdienlichen Ausgestaltung ist ein mehrstufiges Verfahren zur Druckabsenkung bzw. Druckerhöhung vorgesehen, wobei in einer Hochdruckstufe der Druck des Kühlmittels ohne zugeschalteten Druckspeicher ausschließlich mit Hilfe des Druckhalters verändert wird und in einer Niederdruckstufe der Druck nur über den Druckspeicher gesteuert wird. Während des Übergangs von einer Stufe zur anderen Stufe werden die beiden Einrichtungen Druckhalter und Druckspeicher parallel eingesetzt. In der Hochdruckstufe wird im Abfahrbetrieb der Druck ausschließlich mit Hilfe des Druckhalters über die Sprühvorrichtung abgesenkt.

Während des Abfahrbetriebs wird die im Primärkreislauf enthaltene Wärme über den in den Primärkreislauf geschalteten Dampferzeuger abgeführt. Vorzugsweise wird bei Erreichen einer Minimaltemperatur die Wärme dann über ein zugeschaltetes Nachkühlsystem abgeführt. Die Minimaltemperatur liegt hierbei - je nach Ausführung des Dampferzeugers - etwa zwischen 80°C und 120°C. Bei Temperaturen unterhalb dieser Minimaltemperatur ist die Wirksamkeit des Dampferzeugers eingeschränkt. Hierbei wird zunächst das Nachkühlsystem zugeschaltet und parallel zum Dampferzeuger betrieben, bis dieser abgeschaltet wird. Das Umschalten vom Dampferzeuger auf das Nachkühlsystems erfolgt hierbei während der Niederdruckstufe.

Zweckdienlicherweise wird der Druck in der Niederdruckstufe mit Hilfe des Druckspeichers zumindest im Wesentlichen konstant gehalten. Die Wärmezu- bzw. -abfuhr in bzw. aus dem Druckhalter erfolgt während der Niederdruckstufe daher isobar. Dies erlaubt eine einfache Drucksteuerung über den Druckspeicher.

Bei dem Druckspeicher handelt es sich vorzugsweise um einen teilweise mit Wasser als Kühlmittel gefüllten Speicher mit einem Gaspolster, insbesondere ein Stickstoffpolster. Über das Stickstoffpolster wird der Druck gesteuert, insbesondere gehalten. Der Druckspeicher ist hierbei eine Komponente eines Notkühlsystems der Kernreaktoranlage, ist daher konzeptionell sowieso vorgesehen. Es sind daher keine zusätzlichen Installationen und Komponenten erforderlich.

Insgesamt ist das Verfahren zur Druckabsenkung des Drucks des Kühlmittels im Abfahrbetrieb vorteilhafterweise ein dreistufiges Verfahren, wobei in der ersten Hochdruckstufe der Druck vom normalen Betriebsdruck von typischerweise etwa 150 bar und von der normalen Betriebstemperatur von typischerweise etwa 330°C auf einen Zwischendruck im Bereich von etwa 20 bis 40 bar, insbesondere 35 bar, reduziert wird. Anschließend wird in der zweiten Niederdruckstufe die Temperatur des Kühlmittels im Druckhalter isobar von etwa 230°C auf etwa die gleiche Temperatur wie das restliche Kühlmittel im Primärkreislauf von etwa 50°C reduziert. In der dritten Stufe wird schließlich durch Entnahme des Kühlmittels aus dem Primärkreislauf dessen Druck auf Umgebungsdruck abgesenkt.

Umgekehrt wird beim Hochfahren in der Niederdruckstufe das Kühlmittel im Druckhalter im Bereich des Zwischendrucks isobar auf etwa 200°C erwärmt, bevor der Druckhalter zunehmend die Drucksteuerung übernimmt und der Druck in der Hochdruckstufe auf den Betriebsdruck angehoben wird.

Durch diesen Verfahrensablauf besteht zu jedem Zeitpunkt allenfalls eine vergleichsweise kleine Temperaturdifferenz zwischen der Kühlmitteltemperatur im Primärkreislauf und der im Druckhalter. So beträgt beispielsweise beim Zuschalten des Druckspeichers im Abfahrbetrieb beim bevorzugten Zwischendruck von etwa 30 bar die Temperatur im Druckhalter etwa 230°C und im Primärkreislauf etwa 200°C.

Vorteilhafterweise entspricht der Wert des Zwischendrucks hierbei einem Wert im Bereich etwas oberhalb des für den Betrieb einer Hauptkühlmittelpumpe erforderlichen Minimaldrucks. Damit wird die Betriebsbereitschaft der Hauptkühlmittelpumpe aufrecht erhalten, so dass ein zügiges und effizientes Abführen der verbleibenden Restwärme gewährleistet ist.

Zweckdienlicherweise wird beim Abfahrbetrieb während der Hochdruckstufe durch Einsprühen von relativ kaltem Kühlmittel in den Druckhalter die hierin herrschende Temperatur und damit auch der Dampfdruck verringert. Durch das Einsprühen des Kühlmittels kondensiert der im Dampfraum des Druckhalters befindliche Dampf teilweise, so dass der Dampfdruck abgesenkt wird. Das eingesprühte Kühlmittel wird hierbei aus dem kalten Leitungspfad des Primärkühlkreislaufes entnommen, also aus einem Leitungsbereich vor Eintritt des Kühlmittels in den Reaktordruckbehälter.

Gemäß einer zweckdienlichen Weiterbildung wird anschließend im Übergang zur Niederdruckstufe der Druckhalter mit dem Kühlmittel befüllt, d.h. der Dampfraum wird zunehmend durch flüssiges Kühlmittel ersetzt. Parallel wird der Druckspeicher zugeschaltet, so dass dieser zunehmend die Drucksteuerung übernimmt. Anschließend wird der Druckhalter vollständig mit kaltem Kühlmittel befüllt, um eine möglichst geringe Mischtemperatur im Druckhalter zu erreichen.

Um im Anfahrbetrieb eine zügige und effiziente Temperaturerhöhung im Druckhalter zu erreichen wird bevorzugt die Abwärme der Hauptkühlmittelpumpe zur Erwärmung des Kühlmittels im Druckhalter eingesetzt. Bisher erfolgte die Erwärmung ausschließlich mit Hilfe der im Druckhalter vorgesehenen Heizeinrichtung. Diese wird vorzugsweise ergänzend zur Erwärmung des Kühlmittels auch im Primärkreislauf herangezogen.

Die Aufgabe wird weiterhin gemäß der Erfindung gelöst durch eine Kernreaktoranlage mit den Merkmalen des Patentanspruchs 13. Die im Hinblick auf das Verfahren angeführten Vorteile und bevorzugten Ausgestaltungen sind sinngemäß auch auf die Kernreaktoranlage zu übertragen. Insbesondere weist die Kernreaktoranlage die zur Durchführung des Verfahrens notwendigen Komponenten und Anlagenteile auf.

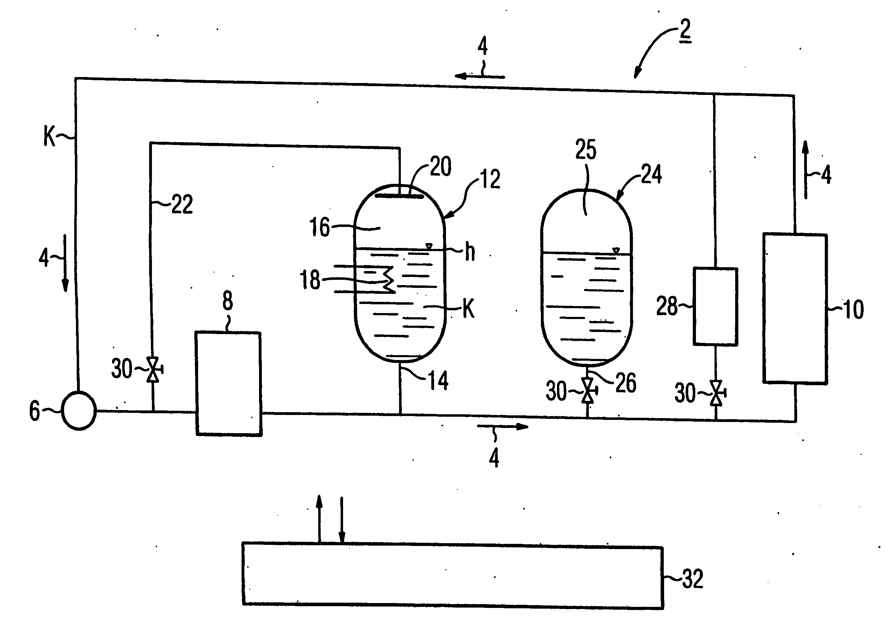

Ein Ausführungsbeispiel der Erfindung wird im Folgenden anhand der einzigen Figur näher erläutert. Diese zeigt in einer schematischen und stark vereinfachten Darstellung ein Schaubild des Primärkreislaufes einer Druckwasserreaktoranlage.

Im dargestellten Primärkreislauf 2 wird Wasser als Kühlmittel K in durch den Pfeil 4 angedeuteter Umwälzrichtung mit Hilfe einer Hauptkühlmittelpumpe 6 umgewälzt. Und zwar wird das Kühlmittel K zunächst einem Reaktordruckbehälter 8 zugeführt, darin erhitzt und anschließend über einen Dampferzeuger 10 geleitet, in dem über einen Wärmetauschprozess die im Kühlmittel K enthaltene Wärme auf einen hier nicht näher dargestellten Sekundärkreislauf übertragen und zur Energieerzeugung herangezogen wird. Vom Dampferzeuger 10 wird das Kühlmittel K über die Kühlmittelpumpe 6 wieder dem Reaktordruckbehälter zugeführt.

In Umwälzrichtung 4 nach dem Reaktordruckbehälter 8 ist ein Druckhalter 12 angeordnet, welcher über eine Strömungsverbindung 14 mit dem Primärkreislauf 2 strömungstechnisch verbunden ist. Der Druckhalter 12 dient zur Aufrechterhaltung und Regelung des Drucks des Kühlmittels K im Primärkreislauf 2. Hierzu ist der Druckhalter 12 während des Normalbetriebs bis zu einer Füllstandshöhe h mit Kühlmittel K befüllt. Oberhalt der Füllstandshöhe h ist ein Dampfraum 16 angeordnet. Zur Aufrechterhaltung und Steuerung des Drucks ist weiterhin eine Heizeinrichtung 18 vorgesehen, mit deren Hilfe das Kühlmittel K im Druckhalter 12 erhitzt werden kann. Hierdurch wird der Dampfdruck des im Dampfraum 16 befindlichen Dampfes erhöht, so dass insgesamt der Druck des Kühlmittels K im Primärkreislauf 2 erhöht wird. Zur Absenkung des Drucks besteht die Möglichkeit, vergleichsweise kühles Kühlmittel K über eine Sprühvorrichtung 20 in den Dampfraum 16 einzusprühen. Durch die hierbei erfolgende Kondensation des Dampfes wird der Partialdruck des Dampfes reduziert. Die Sprüheinrichtung 20 ist über eine Abzweigleitung 22 mit einem so genannten "kalten Pfad" des Primärkreislaufes 2 zwischen der Hauptkühlmittelpumpe 6 und dem Reaktordruckbehälter 8 verbunden.

Weiterhin ist ein Druckspeicher 24 vorgesehen, der ebenfalls bis zu einer Füllstandshöhe mit Wasser gefüllt ist und ein Stickstoffpolster 25 zur Druckhaltung aufweist. Üblicherweise herrscht im Druckspeicher ein Druck von etwa 40 bar. Der Druckspeicher bildet ein Teil eines Notkühlsystems. Dieser konzeptionell sowieso vorgesehene Druckspeicher 24 ist über eine weitere Strömungsverbindung 26 mit dem Primärkreislauf 2. Weiterhin ist der Druckspeicher über eine hier nicht näher dargestellte Rückschlageinrichtung während des Betriebs dauernd mit dem Primärkreislauf 2 verbunden.

Parallel zu dem Dampferzeuger 10 ist in den Primärkreislauf 2 ein Nachkühlsystem 28 geschaltet. Dieses Nachkühlsystem 28 umfasst einen hier nicht näher dargestellten Wärmetauscher zur Abführung von Wärme des Kühlmittels K. Die Abzweigleitung 22, die weitere Strömungsverbindung 26 sowie das Nachkühlsystem 28 werden bei Bedarf jeweils über steuerbare Ventile 30 mit dem Primärkreislauf 2 strömungstechnisch verbunden oder von diesem getrennt.

Der Betrieb der Kernreaktoranlage wird üblicherweise über eine zentrale Steuerwarte gesteuert, die eine Steuereinrichtung 32 umfasst.

Beim Normalbetrieb der Kernreaktoranlage wird im Primärkreislauf 2 ein Druck von etwa 150 bar mit Hilfe des Druckhalters 12 eingestellt. Die Temperatur des Kühlmittels K beim Austritt aus dem Reaktordruckbehälter 8 beträgt typischerweise etwa 330°C. Im Druckhalter liegt sie einige Grad darüber und etwa bei 340 bis 345°C. Während des Normalbetriebs ist das Nachkühlsystem 28 vom Primärkreislauf 2 getrennt. Die Abzweigleitung 22 wird bedarfsweise mit dem Primärkreislauf 2 verbunden, falls zur Regelung des Drucks eine geringfügige Druckabsenkung erforderlich ist.

Beispielsweise zu Revisionszwecken oder bei einem Austausch von Brennelementen ist es erforderlich, dass die Reaktoranlage heruntergefahren wird und dass hierbei der Primärkreislauf 2 vollständig drucklos gefahren wird. Bei Wiederinbetriebnahme müssen Druck und Temperatur im Primärkreislauf wieder auf die Betriebsbedingungen gebracht werden, bevor die nukleare Energieerzeugung hochgefahren wird.

Beim Abfahrbetrieb wird in einer ersten Hochdruckstufe der Druck kontinuierlich abgesenkt und zwar ausschließlich mit Hilfe der Sprühvorrichtung 20 des Druckhalters 12. Die Heizeinrichtung 18 ist während dieser ersten Stufe des Abfahrbetriebs ausgeschaltet. Gleichzeitig sind die Steuerstäbe im Reaktordruckbehälter 8 eingefahren, so dass die Zuführung von Wärmeenergie im Reaktordruckbehälter 8 in das Kühlmittel ebenfalls heruntergefahren wird. Die Hauptkühlmittelpumpe 6 wälzt das Kühlmittel K weiterhin über den Dampferzeuger 10 um, so dass über diesen eine effektive Wärmeabgabe und Temperaturreduzierung des Kühlmittels K im Primärkreislauf 2 erfolgt. Während dieser ersten Stufe des Verfahrens zur Druckabsenkung im Primärkreislauf 2 wächst der Temperaturunterschied zwischen dem Kühlmittel K im Primärkreislauf 2 und dem im Druckhalter 12 an, da kein oder nur ein geringer Strömungsaustausch zwischen dem Kühlmittel K im Druckhalter 12 und dem im Primärkreislauf 2 umgewälzten Kühlmittel K erfolgt.

Bei Erreichen eines Zwischendrucks von etwa 30-35 bar wird anschließend der Druckspeicher 24 zugeschaltet, mit dessen Hilfe dann während einer zweiten Niederdruckstufe der Druck konstant gehalten wird. Der Zwischendruck liegt dabei etwas oberhalb eines notwendigen minimalen Betriebsdrucks für die Hauptkühlmittelpumpe 6 von etwa 25 bar, um deren Betrieb und die Umwälzung des Kühlmittels K weiter aufrecht zu erhalten.

Bei zugeschaltetem Druckspeicher 24 wird der Druckhalter 12 zusehends mit Kühlmittel K angefüllt, um eine möglichst geringe Mischtemperatur innerhalb des Druckhalters zu erreichen. Während dieser Übergangsphase erfolgt die Druckhaltung oder Drucksteuerung sowohl über den Druckhalter 12 als auch über den Druckspeicher 24. Nach dem vollständigen Umschalten auf den Druckspeicher 24, wenn also über den Dampfdruck im Dampfraum 16 des Druckhalters 12 keine Drucksteuerung mehr erfolgt, wird der Druckhalter 12 vollständig mit Kühlmittel K befüllt.

Anschließend erfolgt während der Niederdruckstufe eine Druckhaltung auf etwa 30 bar ausschließlich mit Hilfe des Druckspeichers 24. Während des isobaren Wärmetauschprozesses wird soweit erforderlich Kühlmittel K von extern eingespeist, um den Druck zu halten.

Zum Zeitpunkt des Zuschaltens des Druckspeichers 24 bei dem Zwischendruck von etwa 30 bar ist die Temperatur des Kühlmittels K im Primärkreislauf 2 auf etwa 200°C abgekühlt. Die Temperatur des Kühlmittels K im Druckhalter 12 beträgt noch etwa 230°C, so dass zu diesem Zeitpunkt noch eine unkritische Temperaturdifferenz vorliegt.

Im weiteren Verlauf wird nunmehr über die Abzweigleitung 22 und die Sprühvorrichtung 20 dem Druckhalter 12 kontinuierlich kaltes Kühlmittel K von oben zugeführt, so dass der Druckhalter 12 insgesamt in den Umwälzbetrieb eingebunden wird, so dass nunmehr auch das Kühlmittel K des Druckhalters 12 im Umwälzbetrieb zunächst über den Dampferzeuger 10 und nach Unterschreiten einer Minimaltemperatur über das Nachkühlsystem 28 abgekühlt wird. Durch diese Maßnahme wird das Kühlmittel K im Druckhalter 12 im Wesentlichen gemeinsam mit dem Kühlmittel im Primärkreislauf gekühlt, so dass keine großen Temperaturdifferenzen auftreten können.

Das Nachkühlsystem wird hierbei bei etwa 120°C bis 80°C zugeschaltet und zunächst parallel mit dem Dampferzeuger 10 betreiben, bis dieser bei einer Temperatur kleiner 80°C abgeschaltet wird. Die Wärmeenergie des Kühlmittels K wird dann über das Nachkühlsystem 28 weiter abgeführt.

Sobald eine untere Zieltemperatur von etwa 50°C erreicht ist, wird der Druckspeicher 24 wieder vom Primärkreislauf 2 getrennt und es wird durch Ablassen des Kühlmittels K in einer dritten Stufe der Primärkreislauf 2 vollständig drucklos geschaltet. Üblicherweise wird hierbei der Druckhalter 12 vollständig entleert und mit Stickstoff gefüllt.

Beim Entleerungsvorgang des Druckhalters 12 besteht daher allenfalls noch eine geringfügige Temperaturdifferenz zwischen dem Kühlmittel K im Druckhalter 12 und dem im Primärkreislauf 2, so dass keine thermische Belastung der Strömungsverbindung 14 auftritt.

Die Steuerung der einzelnen Vorgänge erfolgt hierbei über die Steuereinrichtung 32, die mit den einzelnen Komponenten, insbesondere auch den Ventilen 30 sowie hier nicht weiter dargestellten Mess- und Steuereinrichtungen in Verbindung steht.

Durch das hier beschriebene Verfahren wird zum einen eine Temperaturbelastung insbesondere der Strömungsverbindung 14, beim planmäßigen Herunterfahren der Kernreaktoranlage vermieden. Gleichzeitig wird auf bereits vorhandene Komponenten zurückgegriffen, so dass keine zusätzlichen Installationen erforderlich sind.

Beim erneuten Hochfahren der Anlage wird im Wesentlichen in umgekehrter Reihenfolge wie beim Abfahrbetrieb vorgegangen. Zunächst wird der Primärkreislauf 2 und der Druckhalter 12 soweit erforderlich mit Wasser als Kühlmittel K befüllt. Anschließend wird durch Zuschalten des Druckspeichers 24 der Druck des Kühlmittels K im Primärkreislauf 2 auf etwa 30 bis 40 bar angehoben und während der Niederdruckstufe auf diesem Wert in etwa gehalten. Während der Niederdruckstufe wird das Kühlmittel K zusehends erwärmt. Hierbei wird - analog wie im Abfahrbetrieb - auch das Kühlmittel K im Druckhalter 12 im Umwälzbetrieb geführt. Der Druckhalter 12 ist hierbei bevorzugt vollständig mit Kühlmittel K befüllt. Zur Erwärmung des Kühlmittels K wird die Abwärme der Hauptkühlmittelpumpe 6 ausgenutzt. Zusätzlich wird bei Bedarf auch die Heizeinrichtung 18 zur Erwärmung zugeschaltet. Durch den Umwälzbetrieb wird die Temperatur des Kühlmittels K im Druckhalter 12 parallel zu der Temperatur des Kühlmittels im Primärkreislauf 2 zügig angehoben und zwar bis auf einen Wert von etwa 200°C.

Anschließend wird auf die Hochdruckstufe übergeleitet. Hierzu wird der Druckbehälter 12 aus dem Umwälzbetrieb genommen und mit Hilfe der Heizeinrichtung 18 wird das Kühlmittel K im Druckhalter 12 zusehends erwärmt und teilweise verdampft, so dass sich allmählich das Dampfpolster 16 ausbildet und der Druck sich zunehmend erhöht. Sobald ein ausreichend großes Dampfpolster 16 ausgebildet ist, so dass die Drucksteuerung alleine über den Druckhalter 12 erfolgen kann, wird der Druckspeicher 24 abgeschaltet. In der Hochdruckstufe wird die Temperatur des Kühlmittels K im Druckhalter 12 über die Heizeinrichtung 18 zunehmend auf die normale Betriebstemperatur hochgefahren. Gleichzeitig wird auch der Druck auf den normalen Betriebsdruck hochgefahren. Parallel hierzu wird durch den Umwälzbetrieb des Kühlmittels K im Primärkreislauf 2 auch dessen Temperatur auf die Betriebstemperatur hochgefahren. Sobald Betriebsdruck und Betriebstemperatur von 150 bar und etwa 320°C erreicht sind, wird die nukleare Energieerzeugung im Reaktordruckbehälter 8 durch eine entsprechende Ansteuerung der Steuerstäbe hochgefahren.

### Bezugszeichenliste

- 2: Primärkreislauf
- 4: Umwälzrichtung
- 6: Hauptkühlmittelpumpe
- 8: Reaktordruckbehälter
- 10: Dampferzeuger
- 12: Druckhalter
- 14: Strömungsverbindung
- 16: Dampfraum
- 18: Heizeinrichtung
- 20: Sprühvorrichtung
- 22: Abzweigleitung
- 24: Druckspeicher
- 25: Stickstoffpolster
- 26: weitere Strömungsverbindung
- 28: Nachkühlsystem
- 30: Ventil
- 32: Steuereinrichtung

- K: Kühlmittel
- h: Füllstandshöhe

## Patentansprüche

1. Verfahren zur Drucksteuerung des Drucks eines Kühlmittels (K) im Primärkreislauf (2) eines Druckwasserreaktors, bei dem der Druck im Primärkreislauf (2) im Normalbetrieb mit Hilfe eines in einem mit dem Primärkreislauf (2) verbundenen Druckhalter (12) unter Druck stehenden Dampfpolsters auf einen Betriebsdruck eingestellt und während eines An- oder Abfahrbetriebs verändert wird, wobei während des An- oder Abfahrbetriebs
- ein Druckspeicher (24) dem Primärkreislauf (2) zugeschaltet wird, um den Druck im Primärkreislauf zu steuern
- die Temperatur des im Druckhalter (12) enthaltenen Kühlmittels (K) angehoben bzw. verringert wird,
- der Druckspeicher (24) wieder vom Primärkreislauf (2) getrennt wird und
- der Druck im Anfahrbetrieb mit Hilfe des Druckhalters angehoben und im Abfahrbetrieb durch Entnahme von Kühlmittel (4) reduziert wird.

2. Verfahren nach Anspruch 1, bei dem während der Drucksteuerung über den Druckspeicher (24) das Kühlmittel (K) im Druckhalter (12) gemeinsam mit dem Kühlmittel (K) des Primärkreislaufs (2) umgewälzt wird.

3. Verfahren nach Anspruch 1, bei dem während des An- oder Abfahrbetriebs der Druck in einer Hochdruckstufe ohne zugeschaltetem Druckspeicher (24) mit Hilfe des Druckhalters (12) verändert wird und in einer Niederdruckstufe der Druck über den Druckspeicher (24) gesteuert wird.

4. Verfahren nach einem der vorhergehenden Ansprüche, bei dem mit Hilfe des Druckspeichers (24) der Druck konstant gehalten wird.

5. Verfahren nach einem der vorhergehenden Ansprüche, bei dem der Druckspeicher (24) zur Drucksteuerung ein Gaspolster aufweist.

6. Verfahren nach einem der vorhergehenden Ansprüche, bei der während des Abfahrbetriebs die im Primärkreislauf (2) enthaltene Wärme zunächst über einen Dampferzeuger (10) und bei Erreichen einer Minimaltemperatur über ein dann zugeschaltetes Nachkühlsystem (28) abgeführt wird.

7. Verfahren nach einem der Ansprüche 2 bis 5, bei dem in der Hochdruckstufe der Druck zwischen dem normalen Betriebsdruck von typischerweise etwa 150 bar und einem Zwischendruck von etwa 20 bis 40 bar verändert wird und bei dem in der Niederdruckstufe die Temperatur des Kühlmittels im Druckhalter (12) im Abfahrbetrieb von etwa 230 °C auf etwa 50°C isobar reduziert bzw. im Anfahrbetrieb auf etwa 200 °C angehoben wird.

8. Verfahren nach einem der vorhergehenden Ansprüche, bei dem mit Hilfe des Druckspeichers (24) der Druck auf einen Wert im Bereich oberhalb des für den Betrieb einer Hauptkühlmittelpumpe (6) erforderlichen Minimaldrucks gehalten wird.

9. Verfahren nach einem der Ansprüche 2 bis 8, bei dem durch Einbringen von Kühlmittel (K) in den Druckhalter (12) die im Druckhalter (12) herrschende Temperatur verringert wird.

10. Verfahren nach Anspruch 9, bei dem der Druckhalter (12) während der Niederdruckstufe mit Kühlmittel (K) befüllt ist.

11. Verfahren nach einem der Ansprüche 2 bis 8, bei dem im Anfahrbetrieb in der Niederdruckstufe das im Druckhalter (12) enthaltene Kühlmittel mit Hilfe der Abwärme einer Hauptkühlmittelpumpe (6) erwärmt wird.

12. Verfahren nach einem der Ansprüche 2 bis 11, bei dem im Anfahrbetrieb zusätzlich das Kühlmittel (k) im Primärkreislauf (2) mit Hilfe einer Heizeinrichtung (18) des Druckbehälters (12) erwärmt wird.

13. Druckwasserreaktor mit einem in einem Primärkreislauf (4) geführten Kühlmittel (K), mit einem mit dem Primärkreislauf (2) verbundenen Druckhalter (12), über den mit Hilfe eines unter Druck stehenden Dampfpolsters ein Betriebsdruck während eines Normalbetriebs eingestellt wird, mit einem Druckspeicher (24) sowie mit einer Steuereinrichtung (32), die derart ausgebildet ist, dass während eines An- oder Abfahrbetriebs, bei dem der Druck im Primärkreislauf (2) verändert wird,
- der Druckspeicher (24) dem Primärkreislauf (2) zugeschaltet wird, um den Druck im Primärkreislauf (2) zu steuern
- die Temperatur des im Druckhalter (12) enthaltenen Kühlmittels (K) angehoben bzw. verringert wird,
- der Druckspeicher (24) wieder vom Primärkreislauf (2) getrennt wird und dass anschließend
- der Druck im Anfahrbetrieb mit Hilfe des Druckhalters angehoben und im Abfahrbetrieb durch Entnahme von Kühlmittel (4) reduziert wird.

## Claims

1. A method for controlling the pressure of a coolant (K) in the primary circuit (2) of a pressurized-water reactor, wherein, in normal operation, the pressure in the primary circuit (2) is set, by means of a steam blanket which is under pressure in a pressure maintaining device (12) connected with the primary circuit (2), at an operating pressure and is changed during start-up or shut-down operation,
- a pressure accumulator (24) being connected with the primary circuit (2), to control the pressure in the primary circuit (2),
- the temperature of the coolant (K) contained in the pressure maintaining device (12) being raised or reduced, respectively,
- the pressure accumulator (24) being disconnected from the primary circuit (2) again, and
- the pressure being raised in start-up operation by means of the pressure maintaining device and being reduced in shut-down operation through a withdrawal of coolant (K),
during start-up or shut-down operation.

2. The method of claim 1, wherein, during pressure control via the pressure accumulator (24), the coolant (K) in the pressure maintaining device (12) is circulated jointly with the coolant (K) of the primary circuit (2).

3. The method of claim 1, wherein, during start-up or shut-down operation, the pressure is changed in a high-pressure stage, the pressure accumulator (24) not being connected, by means of the pressure maintaining device (12), and wherein, in a low-pressure stage, the pressure is controlled via the pressure accumulator (24).

4. The method of any of the preceding claims, wherein the pressure is kept constant by means of the pressure accumulator (24).

5. The method of any of the preceding claims, wherein the pressure accumulator (24) includes a gas blanket for pressure control.

6. The method of any of the preceding claims, wherein, during shut-down operation, the heat contained in the primary circuit (2) is dissipated first of all via a steam generator (10) and, when a minimum temperature is reached, via an aftercooling system (28) which will then be connected.

7. The method of any of claims 2 to 5, wherein, in the high-pressure stage, the pressure is changed between normal operating pressure of typically about 150 bar and an intermediate pressure of about 20 to 40 bar and wherein, in the low-pressure stage, the temperature of the coolant in the pressure maintaining device (12) is isobarically reduced, in shut-down operation, from about 230°C to about 50°C or raised, in start-up operation, to about 200°C, respectively.

8. The method of any of the preceding claims, wherein, by means of the pressure accumulator (24), the pressure is kept at a value in the range above the minimum pressure necessary for operating a main coolant pump (6).

9. The method of any of claims 2 to 8, wherein the temperature prevailing in the pressure maintaining device (12) is reduced by introducing coolant (K) into the pressure maintaining device (12).

10. The method of claim 9, wherein the pressure maintaining device (12) is filled with coolant (K) during the low-pressure stage.

11. The method of any of claims 2 to 8, wherein, in start-up operation, in the low-pressure stage, the coolant contained in the pressure maintaining device (12) is heated up by means of the waste heat of a main coolant pump (6).

12. The method of any of claims 2 to 11, wherein, in start-up operation, additionally the coolant (K) in the primary circuit (2) is heated up by means of a heating device (18) of the pressure maintaining device (12).

13. A pressurized-water reactor with a coolant (K) carried in a primary circuit (2), with a pressure maintaining device (12) connected with the primary circuit (2), through which an operating pressure is set during normal operation by means of a pressurized steam blanket, with a pressure accumulator (24) as well as with a control device (32), which is designed such that during start-up or shut-down operation, during which the pressure in the primary circuit (2) is changed,
- the pressure accumulator (24) is connected to the primary circuit (2), to control the pressure in the primary circuit (2),
- the temperature of the coolant (K) contained in the pressure maintaining device (12) is raised or reduced, respectively,
- the pressure accumulator (24) is disconnected from the primary circuit (2) again, and that then
- the pressure is raised in start-up operation by means of the pressure maintaining device and is reduced in shut-down operation through an extraction of coolant (K).

## Revendications

1. Procédé pour contrôler la pression d'un fluide de refroidissement (K) dans le circuit primaire (2) d'un réacteur à eau sous pression, dans lequel, en fonctionnement normal, la pression dans le circuit primaire (2) est réglée, au moyen d'un matelas de vapeur qui est sous pression dans un dispositif de maintien de la pression (12) relié avec le circuit primaire (2), à une pression de fonctionnement et est changée pendant un fonctionnement de démarrage ou fonctionnement d'arrêt,
- un accumulateur de pression (24) étant relié avec le circuit primaire (2) pour contrôler la pression dans le circuit primaire (2),
- la température du fluide de refroidissement (K) contenu dans le dispositif de maintien de la pression (12) étant augmentée respectivement réduite,
- l'accumulateur de pression (24) étant séparé du circuit primaire (2) à nouveau, et
- la pression étant augmentée en fonctionnement de démarrage au moyen du dispositif de maintien de la pression et réduite en fonctionnement d'arrêt par soutirage de fluide de refroidissement (K),
pendant le fonctionnement de démarrage ou fonctionnement d'arrêt.

2. Procédé de la revendication 1, dans lequel, pendant le contrôle de pression par l'accumulateur de pression (24), le fluide de refroidissement (K) dans le dispositif de maintien de la pression (12) est fait circuler ensemble avec le fluide de refroidissement (K) du circuit primaire (2).

3. Procédé de la revendication 1, dans lequel, pendant le fonctionnement de démarrage ou fonctionnement d'arrêt, la pression est changée dans un étage à haute pression, l'accumulateur de pression (24) n'étant pas relié, au moyen du dispositif de maintien de la pression (12), et dans lequel, dans un étage à basse pression, la pression est contrôlée par l'accumulateur de pression (24).

4. Procédé de l'une quelconque des revendications prédédentes, dans lequel la pression est maintenue constante au moyen de l'accumulateur de pression (24).

5. Procédé de l'une quelconque des revendications prédédentes, dans lequel l'accumulateur de pression (24) comprend un matelas de gaz pour le contrôle de la pression.

6. Procédé de l'une quelconque des revendications prédédentes, dans lequel, pendant le fonctionnement d'arrêt, la chaleur contenue dans le circuit primaire (2) est dissipée d'abord par un générateur de vapeur (10) et, lorsqu'une température minimale est atteinte, par un système de refroidissement à l'arrêt (28) qui sera alors relié.

7. Procédé de l'une quelconque des revendications 2 à 5, dans lequel, dans l'étage à haute pression, la pression est changée entre la pression de fonctionnement normale d'environ 150 bars typiquement et une pression intermédiaire d'environ 20 à 40 bars et dans lequel, dans l'étage à basse pression, la température du fluide de refroidissement dans le dispositif de maintien de la pression (12) est réduite de façon isobarique, en fonctionnement d'arrêt, d'environ 230°C à environ 50°C, ou augmentée, en fonctionnement de démarrage, à environ 200°C, respectivement.

8. Procédé de l'une quelconque des revendications prédédentes, dans lequel, au moyen de l'accumulateur de pression (24), la pression est maintenue à une valeur dans la gamme au-dessus de la pression minimale nécessaire pour faire fonctionner une pompe principale de fluide de refroidissement (6).

9. Procédé de l'une quelconque des revendications 2 à 8, dans lequel la température régnant dans le dispositif de maintien de la pression (12) est reduite par l'introduction de fluide de refroidissement (K) dans le dispositif de maintien de la pression (12).

10. Procédé de la revendication 9, dans lequel le dispositif de maintien de la pression (12) est rempli de fluide de refroidissement (K) pendant l'étage à basse pression.

11. Procédé de l'une quelconque des revendications 2 à 8, dans lequel, en fonctionnement de démarrage, dans l'étage à basse pression, le fluide de refroidissement contenu dans le dispositif de maintien de la pression (12) est chauffé au moyen de la chaleur dissipée d'une pompe principale de fluide de refroidissement (6).

12. Procédé de l'une quelconque des revendications 2 à 11, dans lequel, en fonctionnement de démarrage, additionnellement le fluide de refroidissement (K) dans le circuit primaire (2) est chauffé au moyen d'un dispositif de chauffage (18) du dispositif de maintien de la pression (12).

13. Réacteur à eau sous pression avec un fluide de refroidissement (K) conduit dans un circuit primaire (2), avec un dispositif de maintien de la pression (12) relié avec le circuit primaire (2), par lequel une pression de fonctionnement est réglée pendant un fonctionnement normal au moyen d'un matelas de vapeur sous pression, avec un accumulateur de pression (24) ainsi qu'avec un dispositif de contrôle (32), qui est conçu de façon que pendant un fonctionnement de démarrage ou fonctionnement d'arrêt, pendant lequel la pression dans le circuit primaire (2) est changée,
- l'accumulateur de pression (24) est relié avec le circuit primaire (2) pour contrôler la pression dans le circuit primaire (2),
- la température du fluide de refroidissement (K) contenu dans le dispositif de maintien de la pression (12) est augmentée respectivement réduite,
- l'accumulateur de pression (24) est séparé du circuit primaire (2) à nouveau, et qu'ensuite
- la pression est augmentée en fonctionnement de démarrage au moyen du dispositif de maintien de la pression et réduite en fonctionnement d'arrêt par soutirage de fluide de refroidissement (K).
